# EUROPÄISCHE PATENTANMELDUNG

(11) **EP 1 065 690 A2**
(43) Veröffentlichungstag der Anmeldung: **03.01.2001**
(21) Anmeldenummer: 00113211.7
(22) Anmeldetag: 21.06.2000
(51) Int. Cl.: H01H 71/10, H01H 71/24

(54) **Anordnung zur selektiven Auslösung**

(30) Priorität: 30.06.1999 DE 19930089
(71) Anmelder: Moeller GmbH, 53115 Bonn (DE)
(72) Erfinder: Händler, Kurt, 53119 Bonn (DE)

(57) **Zusammenfassung**

Die Erfindung betrifft eine Anordnung zur selektiven Auslösung von hintereinander geschalteten, selektiv gestaffelten Schutzschaltern (1; 2; 3), in der ein vom Kurzschluss direkt betroffener Schutzschalter (2; 3) ein Blockiersignal an den Betätigungsmechanismus (12) bzw. das Auslösesystem (13) des vorgeschalteten Schutzschalters (1) ausgibt. Unaufwendig und raumsparend ist mit jeder Hauptstrombahn (24; 34) eines nachgeschalteten Schutzschalters (2; 3) ein Schutzrohrkontakt (25; 35) magnetisch gekoppelt und elektrisch mit dem Auslösesystem (13) des vorgeordneten Schutzschalters (1) verbunden.

## Beschreibung

Die Erfindung betrifft eine Anordnung zur selektiven Auslösung von hintereinander liegenden, selektiv gestaffelten Schutzschaltern, insbesondere von Leitungsschutzschalter und Leistungsschalter.

Aus der Druckschrift DE 30 20 111 A1 ist eine derartige Anordnung von in Reihe liegenden, selektiv gestaffelten strombegrenzenden Leistungsschaltern mit je einem Schnellstauslösesystem bekannt, das im Kurzschlussfall unabhängig vom Betätigungsmechanismus schnell und damit strombegrenzend das Kontaktsystem öffnet. Die vom Kurzschluss direkt betroffenen Leistungsschalter geben ein Blockiersignal an den Betätigungsmechanismus des jeweils in Einspeiserichtung vorgeschalteten Leistungsschalters. Die Leistungsschalter besitzen ein Fesselungssystem, das die beweglichen Kontakte nach einem bestimmten Öffnungsweg kurzzeitig in der Offenstellung festhält und wieder freigibt, wenn der Betätigungsmechanismus ein Blockiersignal von einem nachgeordneten Leistungsschalter erhalten hat. Wenn das Blockiersignal ausbleibt, löst der Betätigungsmechanismus aus und überführt das Kontaktsystem in die endgültige Ausschaltstellung, wodurch gleichzeitig die Fesselung aufgehoben wird. Die Wirkdauer des Fesselungssystems wird durch ein Zeitglied bestimmt. Die Druckschrift EP 0 406 130 B1 zeigt ein elektromagnetisch wirkendes Fesselungssystem. Bekannte Anordnungen zur Erzeugung des Blockiersignals, z.B. nach Druckschrift DE 195 45 928 A1, erfordert Mittel zur Zustandserkennung und zur Stromerfassung des vom Kurzschluss direkt betroffenen Leistungsschalters, die im allgemeinen als aufwendiger elektronischer Auslöser und raumeinnehmende Luftspulen um die Hauptstrombahnen realisiert sind. Derartige Anordnungen sind daher nicht für kleine und preiswerte Schutzschalter geeignet. Aus der Druckschrift DE 197 53 852 A1 ist ein elektromagnetisches Relais mit einem Steuerkreis und einem Laststromkreis, der ein von einer Erregerwicklung steuerbares Kontaktsystem aufweist, bekannt, wobei mit jeder Hauptstrombahn ein in der Nähe einer Anschlussklemme angeordneter Schutzrohrkontakt magnetisch gekoppelt ist, der den Steuerstrom in der Erregerwicklung beeinflusst, und der Schutzrohrkontakt als Schließerkontakt ausgebildet ist. Dieser Druckschrift sind keine Hinweise zur selektiven Auslösung zu entnehmen.

Daraus ergibt sich als Aufgabe, eine unaufwendige und raumsparende Anordnung zur selektiven Auslösung anzugeben.

Ausgehend von einer Anordnung der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Durch die Anordnung eines Schutzrohrkontaktes (Reedkontaktes) im magnetischen Einflussbereich jeder Hauptstrombahn eines nachgeschalteten Schutzschalters erfolgt mittels des Blockiersignals eine sehr schnelle, nur mit der Eigenverzögerung vom Schutzrohrkontakt behaftete Signalmeldung (< 1,5 ms) einem diesem Schutzschalter direkt zuzuordnenden last- oder anlagenseitigen Kurzschluss an dem diesen Schutzschalter einspeiseseitig vorgeschalteten Schutzschalter. Diese Signalisierung erfolgt unabhängig von Kontaktabhebungen oder vom Auftreten von Lichtbögen in dem vom Kurzschluss direkt betroffenen Schutzschalter. Die Erzeugung des Blockiersignals erfordert keine elektronischen Mittel. Die Verarbeitung des Blockiersignals erfolgt vorzugsweise in einem elektronischen Auslöser des vorgeschalteten Schutzschalters. Der Schutzrohrkontakt ist unaufwendig sowie raumsparend anzuordnen. Das vom Schutzrohrkontakt abgegebene Blockiersignal blockiert eine eventuelles Auslösen des vorgeordneten Schutzschalters. Nach Auslösen des vom Kurzschluss betroffenen Schutzschalters verschwindet automatisch das Blockiersignal.

Der Ort des Schutzrohrkontaktes kann in einem weiten Umfang frei gewählt werden, er muss sich nur im magnetischen Einflussbereich der betroffenen Hauptstrombahn befinden, um bei einem Kurzschluss ab einer vorgegebenen Stromstärke reagieren zu können. Es ist vorteilhaft, den Schutzrohrkontakt in der Nähe der zu- oder abgehenden Anschlussklemme oder des magnetischen Schnellauslösers anzuordnen.

Es ist zweckmäßig, als Schließerkontakte ausgebildete Schutzrohrkontakte zu verwenden. Insbesondere ergibt sich hiermit bei mehrpoligen Schutzschaltern oder Schutzschalteranordnungen durch mehrere, entsprechend der Polzahl parallel geschaltete Schutzrohrkontakte in Verbindung mit einer zweipoligen Signalleitung eine vorteilhafte Ausbildung der Erfindung. Auf diese Weise lassen sich auch die Signalleitungen mehrerer Schutzschalter der gleichen selektiven Ebene zusammenführen.

Weitere Einzelheiten und Vorteile der Erfindung ergeben sich aus dem folgenden, anhand von Figuren erläuterten Ausführungsbeispiel. Es zeigen
- Figur 1:: die erfindungsgemäße Anordnung zur selektiven Auslösung in Verbindung mit einer Schaltungsanordnung selektiv gestaffelter Schutzschalter;
- Figur 2:: eine vorzugsweise Anbringung der Schutzrohrkontakte gemäß der Anordnung nach Fig. 1;
- Figur 3:: eine alternative vorzugsweise Anbringung der Schutzrohrkontakte gemäß der Anordnung nach Fig. 1;
- Figur 4:: eine konkrete Ausführung gemäß Fig. 1 und Fig. 2.

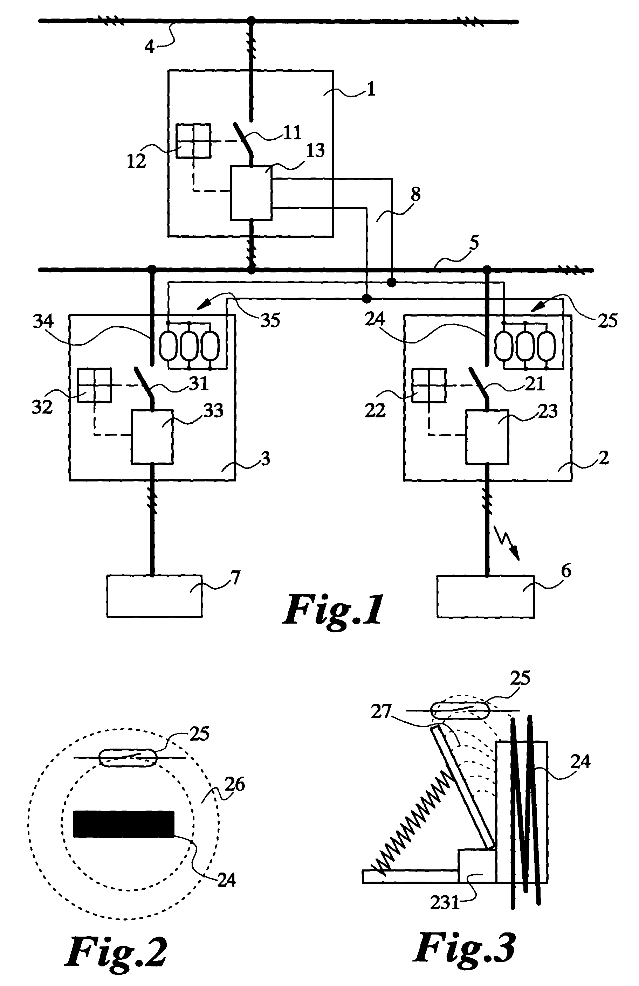

Die Schaltungsanordnung nach Fig. 1 beinhaltet einen ersten Schutzschalter 1 in einer oberen selektiven Ebene und einen zweiten Schutzschalter 2 sowie einen dritten Schutzschalter 3 in einer nachgeordneten selektiven Ebene. Die Schaltungsanordnung ließe sich selbstverständlich noch um weitere Schutzschalter und weitere, selektiv gestaffelte Ebenen erweitern. Die Schutzschalter 1 bis 3 sind hier als Leistungsschalter ausgebildet. Speiseseitig ist der erste Schutzschalter 1 mit der dreipoligen Speiseleitung 4 und lastseitig mit der Verteilerebene 5 verbunden. Der zweite Schutzschalter 2 sowie der dritte Schutzschalter 3 ist speiseseitig mit der Verteilerebene 5 und lastseitig mit einem ersten Verbraucher 6 bzw. einem zweiten Verbraucher 7 verbunden. Jeder Schutzschalter 1, 2 und 3 weist ein dreipoliges Kontaktsystem 11, 21 bzw. 31 auf, das durch einen zugehörigen Betätigungsmechanismus 12, 22 bzw. 32 zu schließen bzw. zu öffnen ist. Der Betätigungsmechanismus 12 des ersten Schutzschalters 1 ist mit einem elektronischen Auslösesystem 13 verbunden, das bei Überlast oder Kurzschluss in der Verteilerebene 5 öffnend auf das Kontaktsystem 11 wirkt. Der Betätigungsmechanismus 22 bzw. 32 des zweiten bzw. dritten Schutzschalters 2 bzw. 3 ist mit einem thermomagnetischen Auslösesystem 23 bzw. 33 verbunden, das bei Überlast oder Kurzschluss auf dem Wege zum oder im ersten bzw. zweiten Verbraucher 6 bzw. 7 öffnend auf das zugehörige Kontaktsystem 23 bzw. 33 wirkt.

Die Anordnung zur selektiven Auslösung der Schutzschalter 1 bis 3 besteht darin, dass in den Schutzschaltern 2 und 3 der unteren Ebene im magnetischen Einflussbereich der dreipoligen Hauptstrombahnen 24 bzw. 34 des zweiten bzw. dritten Schutzschalters 2 bzw. 3 jeweils drei Schutzrohrkontakte 25 bzw. 35 angeordnet sind, von denen jeder einzelne jeweils mit einer der drei Hauptstrombahnen 24 bzw. 25 magnetisch gekoppelt ist. Die jeweils drei Schutzrohrkontakte 24 bzw. 25 sind elektrisch parallel geschaltet und über eine zweipolige Signalleitung 8 mit dem elektronischen Auslösesystem 13 des ersten Schutzschalters 1 verbunden. Die Schutzrohrkontakte 25 und 35 sind als Schließerkontakte ausgebildet. Tritt beispielsweise in der Zuleitung zum ersten Verbraucher 6 ein Kurzschluss auf, dann schließt unmittelbar unter dem Einfluss des infolge des Kurzschlussstromes auftretenden starken Magnetfeldes in den Hauptstrombahnen 24 des zweiten Schutzschalters 2 mindestens einer der Schutzrohrkontakte 25, wodurch in Form eines Kurzschlusses auf der Signalleitung 8 ein Blockiersignal an das Auslösesystem 13 des ersten Schutzschalters 1 gesendet wird. Dieses Blockiersignal verhindert, dass der erste Schutzschalter 1 infolge des Kurzschlusses zum ersten Verbraucher 6 ebenfalls abschaltet und damit in unnötiger Weise gleichfalls den zweiten Verbraucher 7 und gegebenenfalls weitere Verbraucher oder Anlagenteile in der gleichen Ebene oder weiteren nachgeschalteten Ebenen abgeschaltet werden. Aufgrund der beschriebenen Anordnung zur selektiven Auslösung reagiert nur das Auslösesystem 23 des von dem angenommenen Kurzschluss unmittelbar betroffenen zweiten Schutzschalters 2, wodurch über den zugehörigen Betätigungsmechanismus 22 das Kontaktsystem 21 geöffnet und damit der Kurzschluss in der notwendigen Weise abgeschaltet wird, wogegen der andere Teil der Anlage weiterhin in Betrieb bleibt. Nach dem Öffnen des Kontaktsystems 24 des zweiten Schutzschalters 2 bricht das Magnetfeld im Bereich seiner Hauptstrombahnen 24 zusammen, worauf durch Öffnen aller Schutzrohrkontakte 25 das Blockiersignal auf der Signalleitung 8 verschwindet. Sollte ein Kurzschluss in der Verteilerebene 5 auftreten, dann reagiert durch das entsprechende Fehlen eines Blockiersignals das Auslösesystem 13 des ersten Schutzschalters 1 öffnend auf dessen Kontaktsystem 11.

In Fig. 2 ist für den zweiten Schutzschalter 2 am Beispiel eines Schutzkontaktes 25 angedeutet, wie dieser im Bereich des Magnetfeldes 26 einer der im Querschnitt dargestellten Hauptstrombahnen 24, beispielsweise im Bereich einer Anschlussklemme angebracht werden kann. In Fig. 3 ist als weiteres Beispiel angedeutet, wie der Schutzrohrkontakt 25 im Bereich des Magnetfeldes 27 eines mit der Hauptstrombahn 24 verbundenen und als Klappankermagnet ausgebildeten magnetischen Schnellauslösers 231 als Teil des thermomagnetischen Auslösers 23 angebracht werden kann. In gleicher oder ähnlicher Weise lassen sich auch die Schutzrohrkontakte 35 mit den Hauptstrombahnen 35 des dritten Schutzschalters 3 magnetisch koppeln.

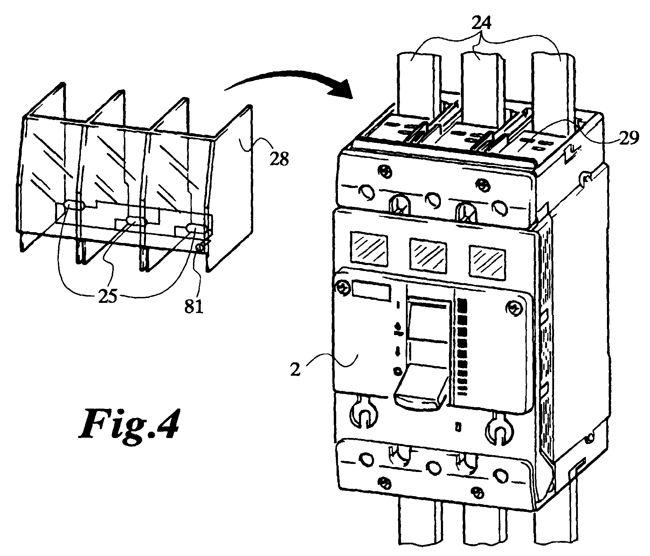

Fig. 4 zeigt für die in Fig. 2 angedeutete Ausführung am Beispiel des zweiten Schutzschalters 2, wie die drei parallel geschalteten Schutzrohrkontakte 25 in einer an sich bekannten Polabdeckung 28 angebracht sind. Die Polabdeckung 28 wird schützend über die hier als Zuleitungen ausgebildeten Hauptstrombahnen 24 im Bereich der Anschlussklemmen 29 befestigt, wodurch die magnetische Kopplung der Schutzrohrkontakte 25 mit den Hauptstrombahnen 24 hergestellt ist. Die Polabdeckung 28 weist zum Anschließen der Signalleitung 8 eine zweipolige Anschlussbuchse 81 auf.

Die vorliegende Erfindung ist nicht auf die vorstehend beschriebenen Ausführungsformen beschränkt, sondern umfasst auch alle im Sinne der Erfindung gleichwirkenden Ausführungsformen. So kann die Erfindung beispielsweise dahingehend abwandelt werde, dass bei mehrpoligen Schutzschaltern als Öffnerkontakte ausgebildete Schutzrohrkontakte in Reihe geschaltet sind. Zur Übertragung des Blockiersignals sind auch andere als nur elektrische Mittel, z.B. auch optische Mittel anwendbar. Die Blockierung der Auslösung des vorgeschalteten Schutzschalters braucht nicht auf die Verwendung eines elektronischen Auslösesystems beschränkt zu sein; sie kann beispielsweise auch durch elektromagnetische Mittel zur Blockade oder Unterbrechung der Kraftübertragung von einem thermomagnetischen Auslösesystems zum Betätigungsmechanismus realisiert werden.

## Patentansprüche

1. Anordnung zur selektiven Auslösung von hintereinander geschalteten, selektiv gestaffelten Schutzschaltern (1; 2; 3), in der ein vom Kurzschluss direkt betroffener Schutzschalter (2; 3) ein Blockiersignal an den Betätigungsmechanismus (12) bzw. das Auslösesystem (13) des vorgeschalteten Schutzschalters (1) ausgibt, **dadurch gekennzeichnet**, dass mit jeder Hauptstrombahn (24; 34) eines nachgeschalteten Schutzschalters (2; 3) ein Schutzrohrkontakt (25; 35) magnetisch gekoppelt und elektrisch mit dem Auslösesystem (13) des vorgeordneten Schutzschalters (1) verbunden ist.

2. Anordnung nach Anspruch 1, **dadurch gekennzeichnet**, dass der Schutzrohrkontakt (25) in der Nähe einer Anschlussklemme (29) des Schutzschalters (2) angeordnet ist.

3. Anordnung nach Anspruch 2, **dadurch gekennzeichnet**, dass der Schutzrohrkontakt (25) in der Nähe eines magnetischen Schnellauslösers (231) des Schutzschalters (2) angeordnet ist.

4. Anordnung nach einem der vorstehenden Ansprüche, **dadurch gekennzeichnet**, dass der Schutzrohrkontakt (25; 35) als Schließerkontakt ausgebildet ist.

5. Anordnung nach Anspruch 4, **dadurch gekennzeichnet**, dass bei einem mehrpoligen Schutzschalter (2; 3) oder bei einer mehrpoligen Schutzschalteranordnung die Schutzrohrkontakte (25; 35) parallel geschaltet sind.
